# EUROPÄISCHE PATENTANMELDUNG

(11) **EP 2 570 068 A1**
(43) Veröffentlichungstag der Anmeldung: **20.03.2013**
(21) Anmeldenummer: 12401184.2
(22) Anmeldetag: 11.09.2012
(51) Int. Cl.: A47L 15/42

(54) **Verfahren zur Reinigung eines Spülflotten-Speicherbehälters**

(30) Priorität: 13.09.2011 DE 102011053548
(71) Anmelder: Miele & Cie. KG, 33332 Gütersloh (DE)
(72) Erfinder: Hellweg, Markus, 33619 Bielefeld (DE); Kara, Carcus, 49152 Bad Essen (DE)

(57) **Zusammenfassung**

Die Erfindung betrifft ein Verfahren zum Betreiben eines Spülautomaten (1) mit einem Spülflotten-Speicherbehälter (15), wobei der Speicherbehälter (15) separat von einem Spülbehälter (2) des Spülautomaten (1) ausgebildet ist, und wobei das Verfahren bedarfsweise ein Programm oder einen Programmabschnitt zur Reinigung des Speicherbehälters (15) beinhaltet. Um ein Verfahren zum Betreiben eines Spülautomaten mit einem Spülflotten-Speicherbehälter anzugeben, das insbesondere unter dem Gesichtspunkt der sicheren Hygiene weitere Vorteile bietet, wird vorgeschlagen, dass die Aufbereitung der Flotte zur Reinigung des Speicherbehälters (15) in dem Spülbehälter (2) erfolgt und dass in einem der eigentlichen Speicherbehälterreinigung vorgeschalteten Kontrollschritt die Flotte auf ihre Eignung zur Reinigung überprüft wird, wobei die Trübung der Flotte gemessen wird.

## Beschreibung

Die Erfindung betrifft ein Verfahren zum Betreiben eines Spülautomaten mit einem Spülflotten-Speicherbehälter, wobei der Speicherbehälter separat von einem Spülbehälter des Spülautomaten ausgebildet ist, und wobei das Verfahren bedarfsweise ein Programm oder einen Programmabschnitt zur Reinigung des Speicherbehälters beinhaltet.

Aus dem Stand der Technik sind Spülautomaten mit einem Spülflotten-Speicherbehälter bekannt geworden. Ein solcher Speicherbehälter, auch Zwischenspeicherbehälter genannt, dient der Zwischenspeicherung von Spülflotte zum Zweck der späteren Verwendung. Dies hilft Ressourcen, insbesondere Wasserressourcen, einzusparen, da hinsichtlich der zwischengespeicherten Spülflotte eine Mehrfach- bzw. Wiederverwendung stattfinden kann. Insbesondere die relativ saubere Klarspülflotte aus dem letzten wasserführenden Programmabschnitt eines Geschirrspülautomaten bietet sich zur Speicherung an, siehe auch DE 40 04 057 A1.

Aus Hygienegründen müssen Speicherbehälter von Zeit zu Zeit gereinigt werden. Es kann ansonsten zur unerwünschten Bildung und späteren Ausbreitung von Bakterien, Keimen oder dergleichen kommen. Aus dem Stand der Technik sind zahlreiche Verfahren zur Reinigung eines Speicherbehälters bekannt geworden. Insbesondere die WO 2010/010012 A1 offenbart ein Speicherbehälterreinigungsprogramm. Dieses ist entweder vom Benutzer auswählbar oder wird turnusmäßig als fester Bestandteil eines Spülprogramms durchgeführt.

Es ist die Aufgabe der Erfindung, ein Verfahren zum Betreiben eines Spülautomaten mit einem Spülflotten-Speicherbehälter anzugeben, das insbesondere unter dem Gesichtspunkt der sicheren Hygiene weitere Vorteile bietet.

Zur Lösung dieser Aufgabe wird mit der Erfindung ein Verfahren der eingangs genannten Art vorgeschlagen, bei dem die Aufbereitung der Flotte zur Reinigung des Speicherbehälters in dem Spülbehälter erfolgt und bei dem in einem der eigentlichen Speicherbehälterreinigung vorgeschalteten Kontrollschritt die Flotte auf ihre Eignung zur Reinigung überprüft wird, wobei die Trübung der Flotte gemessen wird.

Das erfindungsgemäße Verfahren sieht eine Reinigung eines Spülflotten-Speicherbehälters mit aufbereiteter Flotte vor. Die Aufbereitung erfolgt in dem Spülbehälter des Geschirrspülautomaten. Erfindungsgemäß ist außerdem vorgesehen, dass die zur Speicherbehälterreinigung aufbereitete Flotte vor der eigentlichen Durchführung der Speicherbehälterreinigung auf ihre Eignung zur Reinigung überprüft wird. Ergibt diese Überprüfung, dass die Flotte zu stark verschmutzt ist und eine Reinigung des Spülflotten-Speicherbehälters deshalb nicht erfolgen kann, so wird die Flotte mit Bezug auf eine Speicherbehälterreinigung verworfen. Ergibt die Eignungsprüfung hingegen, dass die Flotte für eine Speicherbehälterreinigung genutzt werden kann, so wird eine entsprechende Reinigung durchgeführt. Die Überprüfung der Flotte auf ihre Eignung zur Reinigung wird mittels einer Messung der Trübung der Flotte durchgeführt. Die Trübung der Flotte entspricht dabei dem Grad der Verschmutzung der Flotte mit Fremdstoffen.

Die Trübung der Flotte wird gemäß einer vorteilhaften Ausführungsform der Erfindung mit einem Trübungssensor gemessen, welcher im Spülbehälter oder in einem den Spülbehälter enthaltenden Spülflottenkreislauf angeordnet ist. Es kann dann der Sensor verwendet werden, der bereits in dem Spülautomaten vorhanden ist und ansonsten zur Steuerung des eigentlichen Spülprogramms dient. Zur Erhöhung der Prozesssicherheit und um auch eine späte Verschmutzung der Flotte erkennen zu können, ist es vorteilhaft, wenn die Trübung der Flotte während eines Spülprogrammablaufs mehrfach zu unterschiedlichen Zeitpunkten gemessen wird. Eine Speicherbehälterreinigung soll dann durchgeführt werden, wenn die gemessenen Trübungswerte eine vorgegebene Bedingung erfüllen. Um Wasser und Energie zu sparen, muss eine Speicherbehälterreinigung nicht nach jedem Spülprogramm oder jeder Benutzung des Speicherbehälters durchgeführt werden. Die Aufbereitung der Flotte zur Reinigung des Speicherbehälters und der Kontrollschritt mit einer eventuellen Speicherbehälterreinigung können jeweils nach Ablauf einer vorgegeben ersten Anzahl von durchgeführten Spülprogrammen, durchgeführten Speichervorgängen oder einer vorgegebenen ersten Gesamtspeicherdauer erfolgen. Es kann dann vorkommen, dass gerade in dem Spülprogramm, in dem die Speicherbehälterreinigung turnusmäßig durchgeführt werden soll, die zur Reinigung aufbereitete Flotte nicht die vorgegebenen Bedingungen hinsichtlich ihrer Trübungswerte erfüllt. Dann besteht die Möglichkeit, dass die Aufbereitung der Flotte zur Reinigung des Speicherbehälters und der Kontrollschritt mit einer eventuellen Speicherbehälterreinigung in einem nächsten Spülprogramm erneut durchgeführt wird. Bei einer mehrfachen Nichteignung der Flotte zur Speicherbehälterreinigung, sprich nach Ablauf einer vorgegeben zweiten Anzahl von durchgeführten Spülprogrammen, durchgeführten Speichervorgängen oder einer vorgegebenen zweiten Gesamtspeicherdauer, sollte eine Zwangsreinigung des Speicherbehälters durchgeführt werden, um eine weitere Verkeimung des Behälters in jedem Fall zu mindern. Es findet also nach Ablauf einer vorgegeben zweiten Anzahl von durchgeführten Spülprogrammen, durchgeführten Speichervorgängen oder einer vorgegebenen zweiten Gesamtspeicherdauer unabhängig von einem Ergebnis einer Trübungsmessung eine Reinigung des Speicherbehälters statt. Zur Zwangsreinigung kann entweder die Flotte verwendet werden, deren gemessene Trübungswerte die vorgegebene Bedingung nicht erfüllen. Alternativ kann die Flotte, deren gemessene Trübungswerte die vorgegebene Bedingung nicht erfüllen, wenigstens teilweise durch aufbereitete Flotte aus Frischwasser ersetzt oder durch Frischwasser ergänzt werden.

Die Aufbereitung der Flotte zur Reinigung des Speicherbehälters sollte durch Erhitzen auf eine vorgegebene Mindesttemperatur und Zugabe von Reiniger erfolgen, wobei die Flotte während der Erhitzung gegebenenfalls umgewälzt wird.

Es ist insbesondere vorteilhaft, wenn vor der Reinigung des Speicherbehälters ein herkömmlicher Reinigungsprogrammabschnitt durchgeführt wird. Es lässt sich nämlich Wasser und Energie einsparen, wenn die im Reinigungsprogrammabschnitt verwendete Flotte vollständig, teilweise oder um Frischwasser ergänzt zur Reinigung des Speicherbehälters benutzt wird. Um eine sichere Abtötung der im Speicherbehälter angesiedelten Keime zu erreichen und um die Reinigungswirkung zu verbessern, ist es vorteilhaft, wenn die Flotte zum Ende des Reinigungsprogrammabschnitts weiter erhitzt wird.

Will man den Aspekt der Wassereinsparung nicht berücksichtigen und stattdessen den Schwerpunkt auf die Sauberkeit der zur Speicherbehälterreinigung verwendeten Flotte legen, ist es vorteilhaft, wenn die im Reinigungsprogrammabschnitt verwendete Flotte vollständig aus dem Spülbehälter entleert und zur Speicherbehälterreinigung aus Frischwasser neu aufbereitet wird.

Der Spülflotten-Speicherbehälter wird gemäß einem weiteren Merkmal der Erfindung dadurch gereinigt, dass die Flotte während des Programms oder des Programmabschnitts zur Reinigung des Speicherbehälters in diesem für eine vorgebbare Einwirkzeitdauer verbleibt. Alternativ oder zusätzlich kann der Speicherbehälter während des Programms oder des Programmabschnitts zu seiner Reinigung mehrfach durchgespült werden.

Der Speicherbehälter kann gemäß einem weiteren Merkmal der Erfindung mehrfach durchgespült werden. Darüber hinaus kann die Flotte in dem Speicherbehälter für eine vorgebbare Einwirkzeitdauer verbleiben. Auch hierdurch kann eine Verbesserung des Reinigungsergebnisses erreicht werden. Nach dem Programm oder Programmabschnitt zur Reinigung des Speicherbehälters ist es sinnvoll, wenn die Flotte entleert wird, weil sie stark mit Keimen und Bakterien aus dem Speicherbehälter belastet ist.

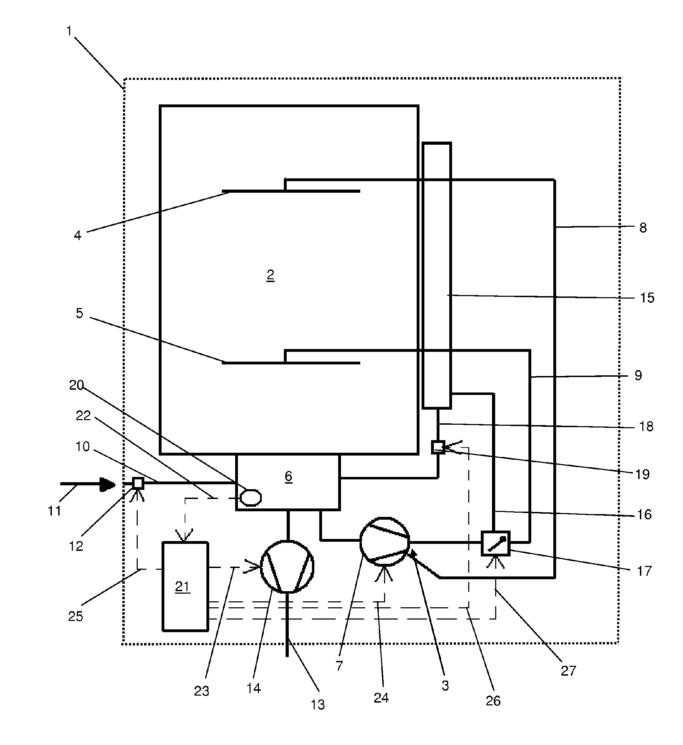

Weitere Merkmale und Vorteile der Erfindung ergeben sich aus der nachfolgenden Beschreibung anhand der Figur. Diese zeigt in schematischer Darstellung einen Spülautomaten 1. Dieser verfügt über einen Spülbehälter 2, der den eigentlichen Spülraum bereitstellt. Innerhalb des Spülbehälters 2 können verfahrbar angeordnete und in der Figur nicht näher dargestellte Geschirrkörbe bzw. Besteckschubladen zur Aufnahme von zu reinigendem Geschirr bzw. zu reinigenden Besteckteilen angeordnet sein.

Zum Zweck des Auftrages von Spülflüssigkeit, der sogenannten Spülflotte auf zu reinigendes Geschirr und/oder zu reinigende Besteckteile verfügt der Geschirrspülautomat 1 über im Spülbehälter 2 angeordnete Sprüharme 4 und 5. Je nach Ausgestaltung des Spülautomaten 1 können auch mehr als nur zwei Sprüharme 4 und 5 vorgesehen sein.

Ausgehend von einem Sammeltopf 6 des Spülautomaten 1 sind die Sprüharme 4 und 5 jeweils an Zuleitungen 8 und 9 angeschlossen. Es ist ferner eine Umwälzpumpe 7 vorgesehen, wie in der schematischen Darstellung zu erkennen. Die Spülflotte sammelt sich im Sammeltopf 6 an. Von hier aus wird sie mittels der Umwälzpumpe 7 angesogen und über die Zuleitungen 8 und 9 zu den Sprüharmen 4 bzw. 5 geleitet. Von hieraus gelangt die Spülflotte auf das zu reinigende Geschirr bzw. auf die zu reinigenden Besteckteile. Sie sammelt sich dann anschließend wieder im Sammeltopf 6 und es erfolgt eine erneute Umwälzung. Die beiden Sprüharme 4 und 5 können parallel betrieben werden, vorzugsweise werden sie jedoch abwechselnd mit Spülflotte versorgt. Hierzu ist dann ein Verteiler 3 notwendig, beispielsweise eine in den Zeichnungen nicht dargestellte Wasserweiche, welche in der Umwälzpumpe 7 integriert sein kann.

Der Sammeltopf 6 ist an eine Frischwasserleitung 10 angeschlossen. In Richtung des Pfeils11 kann über diese Frischwasserleitung 10 Frischwasser in den Sammeltopf 6 und damit in den Spülbehälter 2 des Spülautomaten 1 eingespeist werden. Hierzu ist in der Frischwasserleitung 10 ein Zulaufventil 12 angeordnet.

Der Sammeltopf 6 ist ferner an eine Abwasserleitung 13 angeschlossen. Mittels einer dafür vorgesehenen Entleerungspumpe 14 kann die Spülflotte aus dem Sammeltopf 6 und damit aus dem Spülbehälter 2 des Spülautomaten 1 entleert und über die Abwasserleitung 13 zwecks Entsorgung abgeführt werden.

Der Geschirrspülautomat 1 verfügt desweiteren über einen Spülflotten-Speicherbehälter 15. Dieser ist im gezeigten Ausführungsbeispiel vom Spülbehälter 2 und damit insbesondere vom Sammeltopf 6 separat ausgeführt. Über eine Zuleitung 16 ist der Speicherbehälter 15 unter Zwischenschaltung eines Zweiwegeventils 17 an die Umwälzpumpe 7 angeschlossen.

Soll zum Zweck der Zwischenspeicherung Spülflotte in den Speicherbehälter 15 geführt werden, so ist das Zweiwegeventil 17 in die entsprechende Stellung zu bringen. Die von der Umwälzpumpe 7 umgewälzte Spülflotte gelangt dann über die Zuleitung 16 in den Speicherbehälter 15. Hier kann sie bis zur weiteren Verwendung in einem nachfolgenden Spülprogramm gespeichert werden.

Für die Rückführung der zwischengespeicherten Flotte ist zwischen dem Speicherbehälter 15 und dem Sammeltopf 6 eine Abflussleitung 18 angeordnet. In der Leitung 18 ist ein Ablaufventil 19 angeordnet. Die im Speicherbehälter 15 zwischengespeicherte Spülflotte kann dann bei geöffnetem Ablaufventil 19 über die Abflussleitung 18 in den Sammeltopf 6 des Spülautomaten 1 strömen. Sobald diese Spülflottenrückführung abgeschlossen ist, wird das Ablaufventil 19 geschlossen und es kann dann in gewohnter Weise eine Umwälzung der Spülflotte durch die Umwälzpumpe 7 vorgenommen werden, infolge dessen die Spürharme 4 und 5 mit Spülflotte beschickt werden.

Die Verschmutzung der im Spülbehälter befindlichen Flotte kann sensorisch ermittelt werden. Hierzu ist im Sammeltopf 6 ein Trübungssensor 20 angeordnet, eine alternative, nicht dargestellte Unterbringungsmöglichkeit ist in einer der Zuleitungen 8 oder 9 gegeben. Der Aufbau und die Arbeitsweise eines solchen Sensors sind beispielsweise aus der DE 100 59 112 C1 bekannt und deshalb hier nicht näher beschrieben.

Ein weiteres Bauteil des dargestellten Spülautomaten ist eine vorzugsweise elektronische Gerätesteuerung 21, welche über eine Datenleitung 22 die Messwerte des Trübungssensors 20 erfasst und über Steuerleitungen 23 bis 27 Verbraucher wie die Pumpen 7 und 14 oder die Ventile 12, 17 und 19 schaltet.

Die erfindungsgemäße Verfahrensdurchführung ist im Folgenden anhand von drei verschiedenen Programmabläufen beschrieben, welche jeweils das erfindungsgemäße Verfahren zum Betreiben eines Spülautomaten 1 beinhalten.

### Gemeinsamer Teil

Bei allen Programmalternativen ist davon auszugehen, dass der Speicherbehälter 15 mit Klarspülflotte aus einem der vorhergehenden Programmabläufe gefüllt sein kann. Zum Programmstart eines Spülprogramms wird diese gespeicherte Flotte jeweils durch Öffnen des Ablaufventils 19 vom Speicherbehälter 15 in den Spülbehälter 2 eingelassen.

Von Zeit zu Zeit bedarf es einer Reinigung des Speicherbehälters 15, um die unerwünschte Ausbreitung von Bakterien, Keimen und/oder dergleichen zu vermeiden. Es ist deshalb vorgesehen, dass die Gerätesteuerung 21 zunächst einmal einen Zeitpunkt festsetzt, an dem eine Reinigung durchgeführt werden sollte. Die Gerätesteuerung 21 zählt die durchgeführten Spülprogramme, die nach der letzten Speicherbehälterreinigung durchgeführt werden. Nach Ablauf einer vorgegeben ersten Anzahl von durchgeführten Spülprogrammen entscheidet die Steuerung 21, dass ein Programm oder ein Programmabschnitt zur Reinigung des Speicherbehälters 15 mittels Flotte stattfinden soll, wenn bestimmte Bedingungen vorliegen. An Stelle aller Spülprogramme können auch nur diejenigen, in denen Speichervorgänge stattgefunden haben, gezählt werden oder es kann die Verweildauer der gespeicherten Flotte im Behälter 15, sprich die Gesamtspeicherdauer ermittelt werden und hieraus das Kriterium zur Notwendigkeit einer Speicherbehälterreinigung abgeleitet werden. Im Folgenden ist die Speicherbehälterreinigung als Bestandteil eines üblichen Spülprogramms beschrieben, in dem neben dem Speicherbehälter 15 auch Spülgut gereinigt wird. Alternativ ist auch die Durchführung eines separaten Programms möglich, welches automatisch von der Gerätesteuerung 21 in Gang gesetzt wird, dies ist auch eine mögliche Ausführungsform zum erfindungsgemäßen Verfahren, die allerdings nicht weiter beschrieben ist.

Nachdem nun von der Gerätesteuerung 21 die Entscheidung zur Durchführung einer Speicherbehälterreinigung in dem betreffenden Spülprogramm getroffen ist, wird abgeprüft, ob die hierfür vorgesehene Flotte überhaupt geeignet ist. Die Prüfung erfolgt innerhalb eines an sich bekannten Reinigungsprogrammabschnitts, da wie vorstehend beschrieben die Speicherbehälterreinigung ja Teil eines herkömmlichen Spülprogramms ist. Es wird bereits innerhalb des Reinigungsprogrammabschnitts zu mehreren Zeitpunkten die Trübung der Spülflotte mit dem Trübungssensor 20 gemessen. Ein erster Trübungswert T1 wird zu Beginn beim Aufheizen der Flotte ermittelt, ein zweiter Wert T2 dann, wenn die Flotte die für den Reinigungsprogrammabschnitt vorgegebene Endtemperatur erreicht hat. Ein dritter Wert T3 wird in der Haltezeit gemessen, die auf das Erreichen der Endtemperatur erfolgt. Die drei werte T1, T2 und T3 müssen eine vorgegebene Bedingung erfüllen. Diese kann ein in Versuchen ermittelter Algorithmus sein, welcher mit der Verschmutzung und/oder Keimbelastung der Flotte korreliert. Dabei sollte sowohl der Absolutbetrag der Werte als auch die Differenz zwischen T1 und T3 nicht zu hoch sein.

Erfüllen die drei Trübungswerte T1, T2 und T3 die vorgegebene Bedingung, wird eine Speicherbehälterreinigung entsprechend einer der nachstehenden vier Alternativen durchgeführt. Andernfalls wird das Spülprogramm ohne Speicherbehälterreinigung fortgesetzt und diese auf das nächste Spülprogramm verschoben. Um die Zahl der Verschiebungen zu begrenzen, wird nach Ablauf einer vorgegeben zweiten Anzahl von durchgeführten Spülprogrammen, durchgeführten Speichervorgängen oder einer vorgegebenen zweiten Gesamtspeicherdauer eine Zwangsreinigung des Speicherbehälters 15 durchgeführt. Zur Zwangsreinigung kann dann die Flotte verwendet werden, deren gemessene Trübungswerte die vorgegebene Bedingung nicht erfüllen. Besser ist es allerdings, wenn diese Flotte wenigstens teilweise durch aufbereitete Flotte aus Frischwasser ersetzt (siehe auch 4. Alternative) oder durch Frischwasser ergänzt wird.

Die zur Speicherbehälterreinigung aufbereitete Flotte wird in den Behälter 15 eingeleitet und verbleibt für eine vorgebbare Einwirkzeitdauer im Speicherbehälter 15. Alternativ oder zusätzlich kann die Flotte mehrmals in den Speicherbehälter 15 eingelassen und nach einer bestimmten Zeit wieder abgelassen werden. Dadurch werden Bakterien und Keime abgetötet und Bakterienbeläge an den Wänden des Speicherbehälters 15 gelöst. Im Anschluss an die Speicherbehälterreinigung wird die Flotte über die Abwasserleitung 13 entleert, neues Frischwasser in den Spülbehälter 2 eingelassen und das Programm mit einem Zwischenspülprogrammabschnitt fortgesetzt.

Im Folgenden sind verschiedene Methoden der Aufbereitung der zur Speicherbehälterreinigung vorgesehen Flotte dargestellt.

### 1. Alternative: Spülflotte zur Speicherbehälterreinigung verwenden

In der einfachsten Ausgestaltungsform der Flotten-Aufbereitung erfolgt diese durch die im Reinigungsprogrammabschnitt übliche Aufheizung und Reinigerzugabe während des zum Spülen üblichen Umwälzbetriebs, sprich, die Flotte wird am Ende dieses Programmabschnitts ohne weitere Maßnahmen in den Speicherbehälter 15 geleitet.

### 2. Alternative: Spülflotte weiter aufheizen

Nach der Durchführung der dritten Messung des Trübungswerts (T3) wird die Haltezeit beendet und es erfolgt ein weiteres Aufheizen der Spülflotte auf eine Temperatur von mindestens 50°C, vorzugsweise 65°C mit weiterer Umwälzung. Es kann ein weiterer Trübungswert T4 ermittelt werden. Anschließend wird die erhitzte Flotte in den Speicherbehälter 15 geleitet.

### 3. Alternative: Teilwassenwechsel - Spülflotte weiter aufheizen

Nach der Durchführung der dritten Messung des Trübungswerts (T3) wird die Haltezeit beendet. Es wird ein Liter der Spülflotte aus dem Spülbehälter 2 entleert und durch Frischwasser ersetzt. Anschließend wird diese Flotte auf eine Temperatur von mindestens 50°C, vorzugsweise 65°C bei weiterer Umwälzung aufgeheizt. Dann wird die erhitzte Flotte in den Speicherbehälter 15 geleitet.

### 4. Alternative: Wasserwechsel

Diese Alternative kommt aufgrund ihres hohen Wasserverbrauchs vorzugsweise nur bei der vorgeschriebenen Zwangsreinigung zur Anwendung. Dabei wird nach der Durchführung des Reinigungsprogrammabschnitts der Spülbehälter 2 vollständig entleert und es wird Frischwasser eingelassen. Dieses wird umgewälzt, mit Reiniger versehen und auf eine Temperatur von mindestens 50°C, vorzugsweise 65°C aufgeheizt. Dann wird die erhitzte Flotte in den Speicherbehälter 15 geleitet.

## Patentansprüche

1. Verfahren zum Betreiben eines Spülautomaten (1) mit einem Spülflotten-Speicherbehälter (15), wobei der Speicherbehälter (15) separat von einem Spülbehälter (2) des Spülautomaten (1) ausgebildet ist, und wobei das Verfahren bedarfsweise ein Programm oder einen Programmabschnitt zur Reinigung des Speicherbehälters (15) beinhaltet,
**dadurch gekennzeichnet,**
**dass** die Aufbereitung der Flotte zur Reinigung des Speicherbehälters (15) in dem Spülbehälter (2) erfolgt und dass in einem der eigentlichen Speicherbehälterreinigung vorgeschalteten Kontrollschritt die Flotte auf ihre Eignung zur Reinigung überprüft wird, wobei die Trübung der Flotte gemessen wird.

2. Verfahren nach Anspruch 1,
**dadurch gekennzeichnet,**
**dass** die Trübung der Flotte mit einem Trübungssensor (20) gemessen wird, welcher im Spülbehälter (2) oder in einem den Spülbehälter (2) enthaltenden Spülflottenkreislauf angeordnet ist.

3. Verfahren nach Anspruch 1 oder 2,
**dadurch gekennzeichnet,**
**dass** die Trübung der Flotte während eines Spülprogrammablaufes mehrfach zu unterschiedlichen Zeitpunkten gemessen wird.

4. Verfahren nach einem der vorhergehenden Ansprüche,
**dadurch gekennzeichnet,**
**dass** eine Speicherbehälterreinigung durchgeführt wird, wenn die gemessenen Trübungswerte eine vorgegebene Bedingung erfüllen.

5. Verfahren nach einem der vorhergehenden Ansprüche,
**dadurch gekennzeichnet,**
**dass** die Aufbereitung der Flotte zur Reinigung des Speicherbehälters (15) und der Kontrollschritt mit einer eventuellen Speicherbehälterreinigung jeweils nach Ablauf einer vorgegeben ersten Anzahl von durchgeführten Spülprogrammen, durchgeführten Speichervorgängen oder einer vorgegebenen ersten Gesamtspeicherdauer erfolgt.

6. Verfahren nach den Ansprüchen 4 und 5,
**dadurch gekennzeichnet,**
**dass** bei Nichterfüllung der vorgegebenen Bedingung durch die gemessenen Trübungswerte die Aufbereitung der Flotte zur Reinigung des Speicherbehälters (15) und der Kontrollschritt mit einer eventuellen Speicherbehälterreinigung in einem nächsten Spülprogramm erneut durchgeführt wird.

7. Verfahren nach Anspruch 6,
**dadurch gekennzeichnet,**
**dass** nach Ablauf einer vorgegeben zweiten Anzahl von durchgeführten Spülprogrammen, durchgeführten Speichervorgängen oder einer vorgegebenen zweiten Gesamtspeicherdauer eine Zwangsreinigung des Speicherbehälters durchgeführt wird.

8. Verfahren nach einem der vorhergehenden Ansprüche,
**dadurch gekennzeichnet,**
**dass** die Aufbereitung der Flotte zur Reinigung des Speicherbehälters (15) durch Erhitzen auf eine vorgegebene Mindesttemperatur und Zugabe von Reiniger erfolgt, wobei die Flotte während der Erhitzung gegebenenfalls umgewälzt wird.

9. Verfahren nach einem der vorhergehenden Ansprüche,
**dadurch gekennzeichnet,**
**dass** vor der Reinigung des Speicherbehälters (15) ein herkömmlicher Reinigungsprogrammabschnitt durchgeführt wird.

10. Verfahren nach Anspruch 9,
**dadurch gekennzeichnet,**
**dass** die im Reinigungsprogrammabschnitt verwendete Flotte vollständig, teilweise oder um Frischwasser ergänzt zur Reinigung des Speicherbehälters (15) benutzt wird.

11. Verfahren nach Anspruch 9 oder 10,
**dadurch gekennzeichnet,**
**dass** die Flotte zum Ende des Reinigungsprogrammabschnitts weiter erhitzt wird.

12. Verfahren nach Anspruch 10,
**dadurch gekennzeichnet,**
**dass** die im Reinigungsprogrammabschnitt verwendete Flotte vollständig aus dem Spülbehälter (2) entleert und zur Speicherbehälterreinigung aus Frischwasser neu aufbereitet wird.

13. Verfahren nach mindestens einem der vorhergehenden Ansprüche,
**dadurch gekennzeichnet,**
**dass** die Flotte während des Programms oder des Programmabschnitts zur Reinigung des Speicherbehälters (15) in diesem für eine vorgebbare Einwirkzeitdauer verbleibt.

14. Verfahren nach mindestens einem der vorhergehenden Ansprüche,
**dadurch gekennzeichnet,**
**dass** der Speicherbehälter (15) während des Programms oder des Programmabschnitts zu seiner Reinigung mehrfach durchgespült wird.

15. Verfahren nach mindestens einem der vorhergehenden Ansprüche,
**dadurch gekennzeichnet,**
**dass** nach dem Programm oder Programmabschnitt zur Reinigung des Speicherbehälters (15) die Flotte entleert wird.
